(19) Europäisches Patentamt

European Patent Office

Office européen des brevets

(11) Publication number: **0 301 894 B1**

# EUROPEAN PATENT SPECIFICATION

(45) Date of publication of patent specification: **28.04.93**

(51) Int. Cl.⁵: **C08F 210/16**, C08F 4/64

(21) Application number: **88307030.2**

(22) Date of filing: **29.07.88**

(54) Catalysts for preparing saturated elastomeric olefinic copolymers and terpolymers.

(30) Priority: **30.07.87 IT 2151087**

(43) Date of publication of application:
**01.02.89 Bulletin  89/05**

(45) Publication of the grant of the patent:
**28.04.93 Bulletin  93/17**

(84) Designated Contracting States:
**BE DE ES FR GB NL**

(56) References cited:
**EP-A- 0 096 770**
**EP-A- 0 202 550**
**FR-A- 2 434 180**
**US-A- 4 013 823**

(73) Proprietor: **AUSIMONT S.p.A.**
**Foro Buonaparte, 31**
**I-20121 Milano(IT)**

(72) Inventor: **Zucchini, Umberto**
**11, via G. Leopardi**
**I-44100 Ferrara(IT)**
Inventor: **Banzi, Viviano**
**3/P, via Pasta**
**I-44049 Vigarano Mainarda Ferrara(IT)**
Inventor: **Cuffiani, Illaro**
**33, via Bagaro**
**I-44100 Ferrara(IT)**

(74) Representative: **Whalley, Kevin et al**
**MARKS & CLERK 57/60 Lincoln's Inn Fields**
**London WC2A 3LS (GB)**

## Description

The present invention relates to novel catalyst components for preparing essentially amorphous copolymers of ethylene and/or alpha-olefins together with, possibly, conjugated or non-conjugated dienes. More particularly, the invention relates to catalysts comprising such catalyst components, to the preparation of copolymers using the catalysts, and to the copolymers and the vulcanized products thereby obtained.

The copolymerization of ethylene and alpha-olefins, in the presence or absence of dienes, has generally been carried out usig Ziegler-Natta catalysts and, in particular, using catalysts obtained by the reaction of an organometallic aluminum compound and a vanadium compound (see GB Patents Nos. 1,277,629; 1,277,353; and 1,519,472; and Italian Patents Nos. 890,604 and 879,026).

However, the activity of these cataysts and consequently, the polymer yield relative to the amount of catalyst used, is relatively poor, especially if the diene is 1,3-butadiene. Thus, polymers obtained using these prior art catalysts require purification to remove catalyst residues in an expensive supplementary process.

Catalysts having considerably higher activity for copolymerizing ethylene with alpha-olefins, which are therefore able to overcome the above drawbacks, have been disclosed in prior patents, e.g., in US Patents Nos. 3, 789, 036 and 4, 089, 808; GB Patent No. 1, 293, 814; and Belgian Patent No. 893, 443.

Novel catalyst componets have now been found that, in addition to showing high catalytic activities (and therefore the above technical/economical advantages), also make it possible to produce olefinic elastomers, the vulcanized products of which have very good elastic properties, particularly tension-set values. The superior elastic properties are achieved when the elastomers are comprised of terpolymers of ethylene and propylene with a diene, such as 1, 3-butadiene.

The catalytic components of the present invention comprise a reaction product of:

(a) a magnesium compound devoid of electron donor compounds, having the formula:

$$MgX_n(OR)_{2-n}$$

wherein:

X is a chlorine or bromine atom;

R is an aliphatic, cycloaliphatic or aromatic hydrocarbon radical containing up to 20 carbon atoms;

n is a number from 0 to 1. 8, inclusive; and preferably from 0. 5 to 1 inclusive; and

(b) a titanium compound devoid of electron donor compounds, having the formula:

$$Ti(OR)_zX_{4-z'}$$

wherein:

X and R are as defined above; and

z is a number from 0 to 1, inclusive;

the reaction product having a Mg/Ti molar ratio of from 0. 5 to 50, inclusive, preferably from 1 to 10, inclusive; and an OR/Ti molar ratio of from 1. 5 to 5, inclusive.

Various methods may be used to obtain the catalytic components of the invention. A preferred method involves reacting a magnesium compound as defined above (compound a), with either titanium chloride or titanium bromide, optionally in the presence of an aliphatic, aromatic or chlorinated hydrocarbon solvent at a temperature of from 20° to 150°C. A suitable temperature is selected as a function of the concentration and amount of titanium halide used, with a higher concentration of titanium halide (up to 100%) leading to the selection of a lower reaction temperature within the above range.

Examples of magnesium compounds which can be used in preparing the catalytic component are:

$Mg(OC_2H_5)_2$, $Mg[O(i-C_3H_7)]_2$, $MgOC_2H_5Cl$, $MgCl_2-C_2H_5OH$, $MgCl(OC_6H_5)$, and mixtures thereof. In particular, $MgCl(OC_2H_5)$ has been found to be very advantageous.

Examples of titanium compounds which can be used are $TiCl_4$, $TiBr_4$, $TiCl_3OC_2H_5$ and $TiCl_3OC_4H_9$.

Preferred reaction conditions include the use of a titanium halide at a concentration of from 100 g/litre of solvent, up to pure titanium halide, temperatures of from 50° to 140°C, and titanium/magnesium molar ratios of from 1 to 20, and more preferably from 5 to 10. By suitably selecting the temperature, Ti halide concentration and Ti/Mg ratio, e.g. by simple experimentation, one skilled in the art can easily prepare the catalytic component of the present invention.

When the titanium compound has less than 4 chlorine or bromine atoms, a halogenating agent, e.g. a chlorinating agent, is preferably also used. Suitable halogenating agents include halides of organic and inorganic acids, such as, e.g., $AlCl_3$, $SOCl_2$, $SO_2Cl_2$, $BCl_3$, $PCl_3$, $POCl_3$, $RSO_2Cl$, or $RCOCl$; and

halogenated silicon compounds, such as, e.g. $SiCl_4$, $SiHCl_3$, $SiRCl_3$, $SiR_2Cl_2$, $Si(OR)Cl_3$, or $Si(OR)RCl_2$ wherein R is as defined for compound (a) above).

The amount of halogenating agent used may vary over a wide range relative to he magnesium compound present, provided the Mg/Ti and OR/Ti molar ratios of the catalytic component are maintained with the above defined ranges.

When a halogenating agent is employed, the reaction temperature is generally from 0 to 200°C, and preferably from 20° to 150°C. The most suitable temperature in each case will depend on the type of reactant employed.

The catalysts of the present invention are obtained by reacting a catalytic component as described above with a metal-alkyl compound. The metal is selected from Groups I, II or III of the Periodic Table, and a particularly suitable metal is aluminum. Examples of Al-alkyls which may be used are $Al(C_2H_5)_3$, $Al(i-C_4H_9)_3$, $Al(n-C_8H_{17})_3$ and $Al(i-C_4H_9)_2H$.

The molar ratio of the aluminum-alkyl to the transition metal in the catalytic component is higher than 1:1, and is generally from 1:1 to 100:1.

The copolymerization of ethylene and/or alpha-olefins, optionally with the above-defined dienes, is carried out according to known methods, in the presence of an inert hydrocarbon solvent (in which the copolymer often remains in solution) or in the absence of solvents.

When the copolymerization is carried in an inert hydrocarbon solvent, it is preferably carried out in the presence of an excess of propylene (or of a propylene/propane mixture), wherein the polymer produced is not soluble in propylene. In such cases, after removal of the monomers, the polymer may be used without any purification treatment to remove catalytic residues, due to the high activity of the catalysts of the present invention.

The polymerization temperatures may vary over a wide range, e.g. from 0° to 80°C and preferably from 25° to 40°C.

The alpha-olefins used in the copolymerization reaction are of the general forula:

$$R-CH = CH_2$$

where R is $C_1$-$C_6$ alkyl group, preferably propylene, butene-1, 4-methyl-pentene-1, hexene-1, or octene-1. Propylene is preferred, particularly when used in combination with ethylene. Examples of dienes which may be used are 1,3-butadiene, isoprene, 5-ethyldiene-2-norbornene, 1,4-hexadiene and dicyclopentadiene. 1,3-Butadiene and 5-ethyldiene-2-norbornene are preferred.

The saturated and unsaturated olefinic polymers obtained according to the present invention may be crosslinked or vulcanized using known crosslinking or vulcanizing formulations which are based on peroxides, peroxide/sulphur mixtures or sulphur with accelerants. The vulcanized products exhibit very good elastic properties, e.g. tensile strength, or tension set, as compared to corresponding vulcanized copolymers obtained with conventional catalysts that are based on vanadium compounds.

A further novel and unexpected aspect of the present invention is that the new catalysts, in contrast to previously known catalysts, also show high catalytic activity in the terpolymerization of an ethylene/alpha-olefin/conjugated diene system, particularly in the terpolymerization of ethylene/propylene/1,3-butadiene. Additionally, the terpolymers obtained thereby produce vulcanized products having particularly good elastic properties.

This result is of considerable interest because the use of butadiene in place of other, non-conjugated dienes which are presently used in the preparation of unsaturated olefinic elastomers, provides significant technical and economic advantages. For example, the finishing processes are simpler and cheaper, the quality of the end product is better, and butadiene is a lower cost material as compared to other dienes.

In order that the invention may be well understood the following Examples are given by way of illustration only.

Example 1

In a 500 $cm^3$ Keller flask, equipped with a jacket, G-3 fritted glass diaphragm, bottom drain, and a mechanical stirrer, there were mixed, at 10°C, 160 ml of $TiCl_4$ and 16 g of chloroethoxy-magnesium [Mg-Cl(OC$_2$H$_5$)] containing 21% Mg and 45% (OC$_2$H$_5$) groups by weight.

Within 1 hour, the temperature was increased to 80°C by circulating oil inside the jacket, and the temperature was kept at this value for 6 hours. After filtration at 80°C, 160 ml of pure $TiCl_4$ (100% concentration) was added, the temperature was again increased to 80°C and maintained at this value for 2 hours. After filtration at 80°C, the catalyst was twice washed with anhydrous hexane at 50°C and three

EP 0 301 894 B1

times at room temperature.

The catalytic solid was finally dried under vacuum at 40°C for 1 hour.

The solid was analyzed and found to have Mg/Ti and $OC_2H_5$/Ti molar ratios of 4. 5: 1 and 1. 75: 1, respectively.

The catalyst was used to polymerize ethylene with propylene and 1, 3-butadiene; the synthesis conditions and the results obtained being given in Table 1.

Example 2

The same equipment as used in Example 1 was employed. 50 ml of $TiCl_4$, diluted with 50 ml of anhydrous n-heptane, and 10 g of the same magnesium compound as described in Example 1, were mixed at 10°C.

Within 1 hour, the temperature was increased to 80°C, and kept at this value for 4 hours. After filtration at 80°C, 50 ml of n-heptane and 50 ml of $TiCl_4$ were added.

The subsequent steps were carried out as described for the preparation of the catalytic component of Example 1.

The catalytic solid obtained had the following molar ratios: Mg/Ti = 4. 0: 1; $C_2H_5O$/Ti = 1. 83: 1.

The catalyst was tested in the polymerization of ethylene with propane and 1, 3-butadiene; the synthesis conditions and the results obtained being given in Table 1.

Example 3

Using the same equipment as disclosed in Example 1, 150 ml of $TiCl_4$ and 51 g of the same magnesium compound as described in Example 1 were mixed.

Within 30 minutes, the temperature was increased to 40°C, and kept at this value for 2 hours. After filtration at 40°C, the catalytic solid was washed with anhydrous n-hexane, once at 40°C and twice at room temperature. The product was then dried vacuum at 40°C for 1 hour.

The solid was analyzed and found to have the following molar ratios: Mg/Ti = 3. 6: 1; $C_2H_5O$/Ti = 3. 23: 1.

The catalyst was tested inthe polymerization of ethylene with propylene and 1, 3-butadiene; the synthesis conditions and the results obtained are given in Table 1.

Example 4

The synthesis of the catalytic component of Example 3 was repeated, the only difference being that the synthesis was carried out at 25°C.

The catalytic solid was vacuum dried at 40°C for 1 hour and the analysis showed the following molar ratios: Mg/Ti = 3.9:1; $C_2H_5O$/Ti = 4.61:1.

The catalyst was tested in the polymerization of ethylene with propylene and 1,3-butadiene; the synthesis conditions and the results obtained are reported in Table 1.

Example 5

20 g of magnesium chloro-ethoxide, prepared as in Example 1, was refluxed with 200 ml of $SiCl_4$ for 6 hours. A solid was obtained which contained, by weight: $-OC_2H_5$ groups = 26.4%; Mg = 24.5%.

Using the same equipment as used for preparing the catalytic component of Example 1, 31 ml of $TiCl_4$, diluted with 70 ml of anhydrous n-heptane,and 10 g of the above described magnesium compound were mixed at 10°C.

Within 1 hour, the temperature was increased to 80°C, and kept at this value for 4 hours. After filtration at 80°C, 31 ml of $TiCl_4$ and 70 ml of anhydrous n-heptane were added. The temperature was increased again to 80°C, and maintained at this value for 2 hours.

The subsequent steps were the same as reported in the preparation of the catalytic component of Example 1.

Analysis showed the solid to have the following molar ratios: Mg/Ti = 5.5:1, $OC_2H_5$/Ti = 2.19:1.

The catalyst was tested in the polymerization of ethylene with propylene and 1,3-butadiene; the synthesis conditions and the results obtained are reported in Table 1.

4

Example 6

To a porcelain jar of 350 cm$^3$ capacity, equipped with two porcelain balls of 40 mm diameter, and two porcelain balls of 26 mm diameter, were charged 8.1 g of magnesium butyl-octyl-chloroethoxide having the following composition, by weight: Mg - 21.5%; Cl - 55.2%; OC$_2$H$_5$ - 11.9%; butyloctyl = 11.4%, and 1.9 g of TiCl$_4$.

A co-milling was carried out inside a RETSCH-type single-place mill for 8 hours. The catalytic solid was recovered within a dry-box.

Analysis showed the solid to have the following molar ratios: Mg/Ti = 7.4:1; OC$_2$H$_5$/Ti = 1.95:1.

The catalyst was tested in the polymerization of ethylene with propylene and 1,3-butadiene; the synthesis conditions and the results obtained are reported in Table 1.

Comparative Example 1

Preparation of the Catalytic Component

The preparation of the catalytic component was carried out as disclosed in the preparation of the catalytic component of Example 1, the only difference being that it was carried out at 120° instead of 80°C.

Analysis showed the catalytic solid, dried under vacuum at 40° for one hour, to have the following molar ratios: Mg/Ti = 8.9:1; OC$_2$H$_5$/Ti = 0.6:1.

The catalyst was tested in the polymerization of ethylene with propylene and 1,3-butadiene; the synthesis conditions and the results obtained are reported in Table 1.

Preparation of Terpolymers:
Ethylene/Propylene/1,3-Butadiene

The synthesis of terpolymers was carried out in an autoclave of 1.5 litres capacity, equipped with a jacket, temperature control means and a magnetic stirrer. After being carefully cleaned, the autoclave was purged by an approximately 1 hour wash with propylene containing 1% triethylaluminum (TEAL). A further wash was carried out with propylene alone. Using suitable calibrated metering vessels, 1000 ml of propylene and 50 ml of butadiene were measured and charged to the autoclave. The temperature was increased to 40° with stirring, and ethylene under a pressure of 2 atmospheres was fed to the autoclave until saturated.

The catalytic system was separately prepared by contacting under a nitrogen atmosphere (at room temperature) the solid catalytic component with an amount of 5 mM/litre of triisobutylaluminum (TIBAL), for 5 minutes.

The suspension obtained was injected into the autoclave through an ethylene-pressurized cylinder. During the polymerization, both temperature and pressure were kept constant, the temperature automatically, and the pressure by feeding ethylene.

The polymerization was complete within a time of 1 to 2 hours, according to the catalytic activity. At the end of the test, 10 ml of acetone, containing IRGANOX -1010 at a weight ratio of 0.3/100 to the produced polymer, was charged. Five minutes later, the monomers were vented off and the autoclave was opened. The polymer was recovered and dried under a nitrogen stream at 70°C.

ANALYSES OF THE POLYMERS

The polymers were dried in an oven at 70°C and the following analytical checks were carried out:
- Determination of I.R.
  composition: C$_3$ % by weight and C$_4$ % by weight
- Determination of $[\eta]^{THM}$ at 135°C
- ML$_1^{+4}$ at 121°C (crude polymer)

Vulcanization

The vulcanization of the unsaturated terpolymer was carried out (after homogenizing the compound on a roller hot-press at 80°C for 10 minutes) on a platen press at 160°C for 30 minutes, with the following formulation:

| Terpolymer | 100 parts by weight |
| ZnO | 5 parts by weight |
| Stearic acid | 1 part by weight |
| FEF carbon black | 55 parts by weight |
| Cortis 100M oil | 30 parts by weight |
| Tertramethylthiuram monosulphide (TMTMS) | 1.5 parts by weight |
| Mercaptobenzothiazole (MBT) | 0.75 parts by weight |
| Sulphur | 1.5 parts by weight |

The determination of the values of tension set was carried out on polymer specimens having a useful length of 50 mm, a thickness and a width of 2 mm, the specimens being cut in the perpendicular direction relative to the direction of feed of the compound on the roller mixer.

For the determination, the standard specimen was stretched to 200% of its original length inside the metal bow of the device, and left standing 10 minutes at 23°C. The specimen was then removed from the bow, left standing 10 minutes at 23°C, and the measurement was carried out at once by means of a template.

RESULT COMPUTATION

$$\text{Tension set\%} = \frac{L - L_0}{L_0} \times 100$$

wherein:

- $L$ = Specimen length after deformation (mm);
- $L_o$ = Initial length of the specimen (50 mm).

Example 7
Synthesis of a Copolymer: Ethylene/Propylene

Using the catalytic component of Example 1, a polymerization of ethylene with propylene was carried out, the synthesis conditions for which and the results obtained being reported hereunder:

| - Propylene (g) | 475 |
| - Ethylene (atm) | 2.5 |
| - Temperature (°C) | 40 |
| - Polymerization time (hours) | 1 |
| - Total pressure (atm) | 18.2 |
| - Co-catalyst (TIBAL) mM/liter | 0.222 |
| - Catalytic component (g) | 0.00267 |
| - Yield (g/g of Ti) | 318,000 |
| - $[\eta]^{THN}$ at 135°C (dl/g) | 3.76 |
| - $ML_1^{+}{}_4$ at 121°C (crude polymer) | 64.7 |
| - $C_3$ (% by weight) | 36 |
| - On the vulcanized product: | |
| Tensile strength (kg/cm$^3$) | 182 |
| Elongation at break (%) | 485 |
| Tension set 200% (%) (at 23°C) | 7 |

The vulcanization of the copolymer was carried out at 165°C on a platen press for 40 minutes, using the following formulation, which was previously homogenized on a roller hotpress at 80°C for 10 minutes:

| -- Copolymer | 100 parts by weight |
|---|---|
| - FEF carbon black | 80 parts by weight |
| - Cortis 100M oil | 30 parts by weight |
| - ZnO | 5 parts by weight |
| - Sulphur | 0.4 parts by weight |
| - Peroximon | 5 parts by weight |

Example 8

Synthesis of a Terpolymer:
Ethylene/Propylene/5-Ethyldiene-norbornene

Using the catalytic omponent of Example 1, a polymerization of ethylene with propylene and 5-ethyldiene-2-norbornene (ENB) is carried out, the synthesis conditions for which and the results obtained being reported hereunder:

| - Propylene (g) | 475 |
|---|---|
| - 5-Ethyldiene-2-norbornene (g) | 13.2 |
| - Ethylene (atm) | 3.5 |
| - Temperature (°C) | 40 |
| - Polymerization time (hours) | 2 |
| - Total pressure (atm) | 19 |
| - Co-catalyst (TIBAL) mM/liter | 1 |
| - Catalytic component (g) | 0.0154 |
| - Yield (g/g of Ti) | 144,000 |
| - $[\eta]^{THN}$ at 135°C (dl/g) | 2.41 |
| - $C_3$ (% by weight) in the terpolymer | 41.1 |
| - $ML_1{}^{+}{}^{4}$ at 121°C (crude polymer) | 26 |
| - ENB (% by weight) in the terpolymer | 3.2 |
| - On the vulcanized product: | |
| Tensile strength (kg/cm$^2$) | 117 |
| Elongation at break (%) | 390 |
| Tension set 200% (%) (at 23°C) | 8 |

T A B L E 1

| EXAMPLE No. | 1 | 2 | 3 | 4 | 5 | 6 | Comparative Example 1 |
|---|---|---|---|---|---|---|---|
| Catalytic component (g) | 0.0245 | 0.0223 | 0.0215 | 0.0485 | 0.0200 | 0.0300 | 0.0130 |
| Polymerization time (h) | 1 | 1 | 1 | 1 | 1 | 1 | 1 |
| Yield (g/g of Ti) | 127,000 | 143,000 | 37,000 | 19,000 | 118,000 | 40,000 | 305,000 |
| $[\eta]$TIN at 135°C (dl/g) | 2.83 | 1.96 | 2.4 | 2.5 | 2.78 | 4.34 | 2.27 |
| $C_3^=$ (% by weight) | 47.9 | 44.3 | 35.1 | 32.2 | 38.9 | 41.4 | 36.6 |
| $C_4^=$ (1-4 TRANS% by weight) | 2.83 | 2.1 | 1.5 | 2.1 | 1.5 | 0.8 | 1.7 |
| ML1+4 at 121°C | 39 | 30 | 26.5 | 37.5 | 46 | --- | 57.5 |
| Tensile strength (kg/cm²) (1) | 93 | 69 | 99 | 123 | 125 | 92 | 103 |
| Elongation at break (%) (1) | 625 | 540 | 670 | 740 | 815 | 890 | 720 |
| Tension set 200% (%) (at 23°C) | 16 | 20 | 21 | 20 | 16 | 21 | 30 |

Synthesis conditions: TIBAL = 5 mM/litre; Temperature = 40°C; Total pressure = 17 atm; Propylene = 475 g; 1,3-Butadiene = 32 g.

(1) Relatively to vulcanised polymer

## Claims

1. A catalytic component for copolymerizing or terpolymerizing olefinic monomers selected from ethylene, alpha-olefins and dienes, comprising the reaction product of:

8

(a) a magnesium compound devoid of electron donor compounds, having the formula:

$$MgX_n(OR)_{2-n}$$

wherein:

X is a chlorine or bromine atom;

R is an aliphatic, cycloaliphatic or aromatic hydrocarbon radical containing up to 20 carbon atoms;

n is a number from 0 to 1.8, inclusive; and

(b) a titanium compound devoid of electron donor compounds, having the formula:

$$Ti(OR)_zX_{4-z'}$$

wherein:

X and R are as defined above; and

z is a number from 0 to 1, inclusive;

the reaction product having a Mg/Ti molar ratio of from 0. 5 to 50, inclusive, and an OR/Ti molar ratio of from 1. 5 to 5, inclusive.

2. A catalytic component as claimed in claim 1, wherein n is from 0. 5 to 1.

3. A catalytic component as claimed in claim 1 or 2, wherein the Mg/Ti molar ratio is from 1 to 10.

4. A catalyst for copolymerizing or terpolymerizing olefinic monomers selected from ethylene, alpha-olefins, and dienes, said catalyst comprising:

(A) an alkyl-metal compound, the metal being selected from Groups I, II and III of the Periodic Table; and

(B) a catalytic component as claimed in any one of the preceding claims,

the molar ratio of the alkyl-metal compound (A) to the titanium compound of the catalytic component (B) being from 1 to 100.

5. A catalyst as claimed in claim 4, wherein the metal-alkyl compound is an alkyl-aluminium.

6. A process for copolymerizing or terpolymerizing olefinic monomers selected from ethylene, alpha-olefin and dienes, in which process there is used a catalyst as claimed in claim 4 or claim 5.

7. A process as claimed in claim 6, wherein ethylene and propylene are copolymerized.

8. A process as claimed in claim 6, wherein ethylene is copolymerized with propylene and a diene which is 1,3-butadiene or 5-ethyldiene-2-norbornene.

9. A process as claimed in any one of claims 6 to 8, further comprising vulcanizing the copolymer or terpolymer obtained.

**Patentansprüche**

1. Katalytische Komponente für die Copolymerisation oder Terpolymerisation olefinischer Monomerer, die ausgewählt sind aus Ethylen, $\alpha$-Olefinen und Dienen, umfassend das Reaktionsprodukt von:

(a) einer Magnesiumverbindung ohne Elektronendonor-Verbindungen mit der Formel:

$$MgX_n(OR)_{2-n}$$

worin:

X für ein Chlor- oder Bromatom steht;

R einen aliphatischen, cycloaliphatischen oder aromatischen Kohlenwasserstoffrest, der bis zu 20 Kohlenstoffatome enthält, darstellt;

n eine Zahl von 0 bis einschließlich 1,8 ist; und

(b) einer Titanverbindung ohne Elektronendonorverbindungen mit der Formel:

$Ti(OR)_zX_{4-z}$

worin:

X und R wie oben definiert sind; und

z eine Zahl von 0 bis einschließlich 1 darstellt;

wobei das Reaktionsprodukt ein Molverhältnis Mg/Ti von 0,5 bis 50, Grenzwerte eingeschlossen, und ein Molverhältnis OR/Ti von 1,5 bis 5, Grenzwerte eingeschlossen, aufweist.

2. Katalytische Komponente wie in Anspruch 1 beansprucht, worin n von 0,5 bis 1 ist.

3. Katalytische Komponente wie in Anspruch 1 oder 2 beansprucht, worin das Molverhältnis Mg/Ti 1 bis 10 beträgt.

4. Katalysator zur Copolymerisation oder Terpolymerisation olefinischer Monomerer, die ausgewählt sind aus Ethylen, α-Olefinen und Dienen, umfassend:

   (A) eine Alkyl-Metallverbindung, wobei das Metall ausgewählt ist aus den Gruppen I, II und III des Periodensystems; und

   (B) eine katalytische Komponente wie in irgendeinem der vorangehenden Ansprüche beansprucht,

   worin das Molverhältnis von Alkyl-Metallverbindung (A) zur Titanverbindung der katalytischen Komponente (B) 1 bis 100 beträgt.

5. Katalysator wie in Anspruch 4 beansprucht, worin die Metall-Alkyl-Verbindung ein Alkyl-Aluminium ist.

6. Verfahren zur Copolymerisation oder Terpolymerisation olefinischer Monomerer, die ausgewählt sind aus Ethylen, α-Olefin und Dienen, in welchem ein wie in Anspruch 4 oder Anspruch 5 beanspruchter Katalysator eingesetzt wird.

7. Verfahren wie in Anspruch 6 beansprucht, worin Ethylen und Propylen copolymerisiert werden.

8. Verfahren wie in Anspruch 6 beansprucht, worin Ethylen mit Propylen und einem Dien, das 1,3-Butadien oder 5-Ethyliden-2-norbornen ist, copolymerisiert wird.

9. Verfahren wie in irgendeinem der Ansprüche 6 bis 8 beansprucht, welches weiter die Vulkanisierung des erhaltenen Copolymeren oder Terpolymeren umfaßt.

**Revendications**

1. Composant catalytique pour copolymériser ou terpolymériser des monomères oléfiniques choisis parmi l'éthylène, des alphaoléfines et des diènes, comprenant le produit réactionnel de:

   a) un composé du magnésium dépourvu de composés donneurs d'électrons, représenté par la formule:

   $MgX_n(OR)_{2-n}$

   dans laquelle:

   X est un atome de chlore ou de brome;

   R est un groupe hydrocarboné aliphatique, cycloaliphatique ou aromatique contenant jusqu'à 20 atomes de carbone;

   n est un nombre de 0 à 1,8 inclus, et

   b) un composé du titane dépourvu de composé donneur d'électrons, représenté par la formule:

   $Ti(OR)_zX_{4-z}$

   dans laquelle:

   X et R sont tels que définis plus haut, et

   z est un nombre de 0 à 1 inclus,

   le produit réactionnel ayant un rapport molaire Mg/Ti de 0,5 à 50 inclus, et un rapport molaire OR/Ti de 1,5 à 5 inclus.

2. Composant catalytique suivant la revendication 1, dans lequel n est de 0,5 à 1.

3. Composant catalytique suivant la revendication 1 ou la revendication 2, dans lequel le rapport molaire Mg/Ti est 1 à 10.

4. Catalyseur pour copolymériser ou terpolymériser des monomères oléfiniques choisis parmi l'éthylène, les alphaoléfines et les diènes, ce catalyseur comprenant:
   (A) un composé métal-alkyle, le métal étant choisi parmi les groupes I, II et III du tableau périodique; et
   (B) un composant catalytique suivant l'une quelconque des revendications précédentes, le rapport molaire du composant (A) métal-alkyle au composé de titane du composant catalytique (B) étant de 1 à 100.

5. Catalyseur suivant la revendication 4, dans lequel le composé métal-alkyle est un aluminium alkyle.

6. Procédé pour copolymériser ou terpolymériser des monomères oléfiniques choisis parmi l'éthylène, des alphaoléfines et des diènes, dans lequel procédé il est utilisé un catalyseur suivant la revendication 4 ou la revendication 5.

7. Procédé suivant la revendication 6, dans lequel l'éthylène et le propylène sont copolymérisés.

8. Procédé suivant la revendication 6, dans lequel l'éthylène est copolymérisé avec du propylène et un diène qui est le 1,3-butadiène ou le 5-éthyldiène-2-norbornène.

9. Procédé suivant l'une quelconque des revendications 6 à 8, comprenant de plus la vulcanisation du copolymère ou du terpolymère obtenu.